# EUROPEAN PATENT APPLICATION

(11) **EP 3 121 076 A2**
(43) Date of publication of application: **25.01.2017**
(21) Application number: 16180399.4
(22) Date of filing: 20.07.2016
(51) Int. Cl.: B60T 7/22, B60T 17/22

(54) **VEHICLE CONTROL DEVICE**

(30) Priority: 21.07.2015 JP 2015144099
(71) Applicant: Toyota Jidosha Kabushiki Kaisha, Toyota-shi, Aichi-ken, 471-8571 (JP)
(72) Inventor: NISHIMURA, Motoki, Aichi-ken, Aichi 471-8571 (JP)
(74) Representative: D Young & Co LLP

(57) **Abstract**

In a vehicle control device, detection of an object around a vehicle is performed, when it is determined that there is a possibility that the vehicle may collide with the object, whether or not a collision can be avoided by braking control of the vehicle is determined, and when it is determined that a collision cannot be avoided by the braking control, steering and braking control to avoid a collision by both steering of the vehicle and braking of the vehicle is performed and at the same time, flashing of a direction indicator is started, and when the vehicle has stopped, flashing of hazard flashing indicators is performed.

## Description

### TECHNICAL FIELD

The present invention relates to a vehicle control device for controlling a vehicle so as to avoid a collision between the vehicle and an object.

### BACKGROUND

The device described in Japanese Unexamined Patent Publication No. 2009-015547 is an example of a device for collision avoidance between a vehicle and an object. This device detects an object which may collide with a vehicle and indicates to a driver, when such an object has been detected, a steering direction of the vehicle to avoid a collision with the object.

### SUMMARY

A device is conceivable which allows, when an object which may collide with the vehicle has been detected, a vehicle to avoid a collision with the object by vehicle control which includes steering control of the vehicle. In such an emergency avoidance situation, it is desirable to inform other road users of a steering direction of the vehicle by the vehicle control.

Therefore, in this technical field, there is a demand for the development of a vehicle control device in which it is possible to appropriately inform other road users of a steering direction of the vehicle when performing vehicle control which includes steering control for avoiding a collision between the vehicle and an object.

Thus, according to an aspect of the present invention, there is provided a vehicle control device comprising: an object detection unit configured to detect an object around a vehicle; a collision determination unit configured to determine whether or not there is a possibility that the vehicle may collide with the object detected by the object detection unit; a braking avoidance determination unit configured to determine, when a determination that there is a possibility that the vehicle may collide with the object is made by the collision determination unit, whether or not a collision can be avoided by braking control of the vehicle, based on a detection result of the object detection unit and a vehicle speed of the vehicle, ; a driving control unit configured to perform the braking control when a determination that the collision can be avoided by the braking control is made by the braking avoidance determination unit, and to perform steering and braking control to avoid the collision by both steering of the vehicle and braking of the vehicle, when a determination that the collision cannot be avoided by the braking control is made by the braking avoidance determination unit; and a lighting control unit configured to start flashing of a direction indicator of the vehicle corresponding to a steering direction of the steering and braking control when a determination that the collision cannot be avoided by the braking control is made by the braking avoidance determination unit, and to flash hazard flashing indicators of the vehicle when the vehicle has been stopped by the steering and braking control.
In this vehicle control device, when it is determined that a collision cannot be avoided by braking control alone, steering and braking control by both steering the vehicle and braking is performed to avoid a collision and flashing of a direction indicator is started in accordance with a steering direction of the steering and braking control, and when the vehicle has been stopped by the steering and braking control, hazard flashing indicators are flashed. Therefore, it is possible to inform other road users of the steering direction of the vehicle through the flashing of the direction indicator, and it is possible to inform other road users that the vehicle is in an emergency stop through the flashing of the hazard flashing indicators.

The vehicle control device may further include a traveling plan generation unit configured to generate a target pathway, within a lane on which the vehicle is traveling, for avoiding a collision of the vehicle with the object, when a determination that the collision cannot be avoided by the braking control is made by the braking avoidance determination unit, and the driving control unit may be configured to perform the steering and braking control in accordance with the target pathway. In this way, by performing the steering and braking control in accordance with the target pathway generated within the lane, it is possible to drive the vehicle while avoiding contact with a vehicle which is being driven on a neighboring lane.

The vehicle control device may further include a display control unit configured to cause steering display corresponding to a steering direction of the steering and braking control by the driving control unit to be displayed on a display in the vehicle when a determination that the collision cannot be avoided by the braking control is made by the braking avoidance determination unit. In this way, steering display corresponding to the steering direction of the steering and braking control can be performed, and the driver can thus become aware of the steering control situation of the vehicle. This can help to reduce a sense of discomfort experienced by the driver due to the steering and braking control.

According to the present invention, when performing vehicle control which includes steering control for avoiding a collision between a vehicle and an object, it is possible to appropriately inform other road users of a steering direction of the vehicle.

### BRIEF DESCRIPTION OF THE DRAWINGS

FIG. 1 is a block diagram showing an outline of the configuration of a vehicle control device according to an embodiment of the present invention.
FIG. 2 is a flowchart showing a control process in the vehicle control device of FIG. 1.
FIG. 3 is an explanatory diagram showing a vehicle state and the like in steering control and braking control in the vehicle control device of FIG. 1.

### DETAILED DESCRIPTION

Hereinafter, an embodiment of the present invention will be described with reference to the drawings. In addition, in the following description, the same or equivalent elements are denoted by the same reference numerals, and overlapping description is omitted.

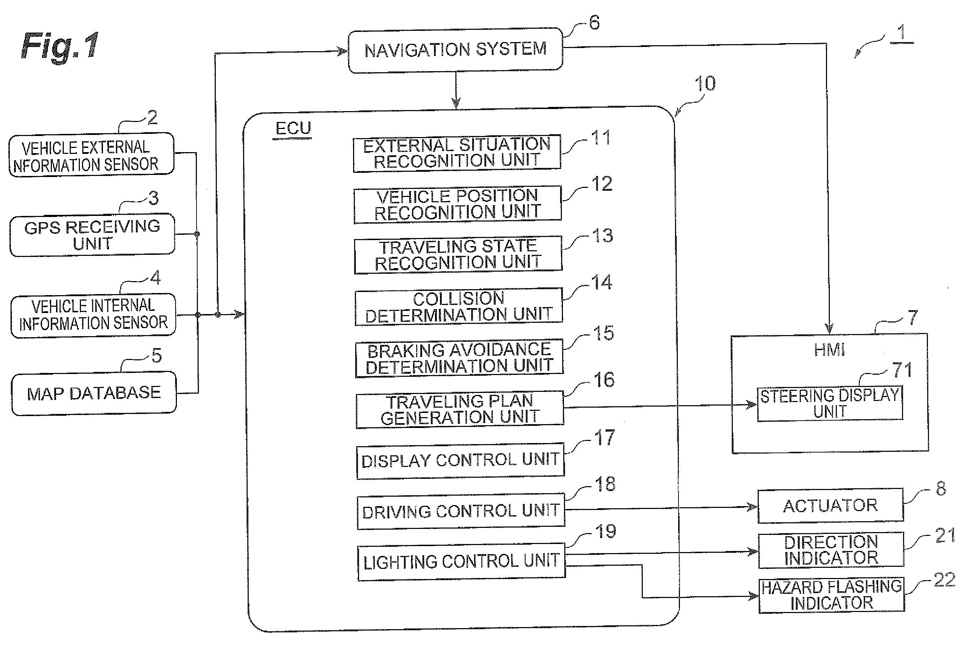

FIG. 1 is a diagram showing an outline of the configuration of a vehicle control device 1 according to an embodiment of the present invention. In FIG. 1, the vehicle control device 1 according to this embodiment is a device which is mounted on a vehicle and automatically performs braking control or steering and braking control of the vehicle in order to avoid a collision between the vehicle and an object near the vehicle. Here, the steering and braking control is control which performs both steering control and braking control of the vehicle, and is control for avoidance of a collision with an object. For example, when a collision between the vehicle and an object near the vehicle can be avoided by only braking control, the vehicle control device 1 performs collision avoidance by only braking control. When a collision cannot be avoided by only braking control, the vehicle control device 1 performs steering and braking control of the vehicle. Further, the vehicle control device 1 performs flashing of a direction indicator of the vehicle in accordance with a steering direction of the steering and braking control and flashes a hazard flashing indicator of the vehicle when the vehicle has been stopped by the steering and braking control.

The vehicle control device 1 is provided with an ECU [Electronic Control Unit] 10. The ECU 10 is an electronic control unit which performs vehicle control which includes the braking control or the steering and braking control of the vehicle, and is configured with a computer which includes a CPU [Central Processing Unit], a ROM [Read Only Memory], and a RAM [Random Access Memory]. The details of the ECU 10 will be described later.

A vehicle external information sensor 2, a GPS [Global Positioning System] receiving unit 3, a vehicle internal information sensor 4, a map database 5, a navigation system 6, an HMI [Human Machine Interface] 7, an actuator 8, a direction indicator 21, and a hazard flashing indicator 22 are connected to the ECU 10.

The vehicle external information sensor 2 is detection equipment which detects an external situation; that is the vehicle external information sensor 2 detects information about the surroundings of the vehicle. The vehicle external information sensor 2 includes at least one of a camera, a radar, and a LIDAR [Laser Imaging Detection and Ranging]. The camera is imaging equipment which images an external situation of the vehicle.

The camera of the vehicle external information sensor 2 functions as a detector which detects an object around the vehicle, and transmits imaging information about the imaged object to the ECU 10. Further, the camera functions as a detection unit which detects white lines provided on the right and the left of a lane on which the vehicle is traveling, and transmits imaging information obtained by imaging the white lines to the ECU 10. The white line may be either a solid line or a dashed line and may be either a single line or a composite line.

The camera is provided on, for example, the back side of a front windshield of the vehicle. The camera may be a monocular camera or may be a stereo camera. The stereo camera has two imaging units disposed so as to reproduce a binocular parallax. Information in a depth direction is also included in the imaging information of the stereo camera. When using the stereo camera, the camera functions as a detector which detects a three-dimensional object which includes a preceding vehicle, an obstacle, a pedestrian, or the like.

The radar detects an object around the vehicle by using radio waves (for example, millimeter waves). The radar transmits radio waves to the surroundings of the vehicle and receives the radio waves reflected by an object, thereby detecting the object. The radar transmits information about the detected object to the ECU 10.

The LIDAR detects an object around the vehicle by using light. The LIDAR sends light to the surroundings of the vehicle and receives the light reflected by an object, thereby measuring a distance to a reflection point and detecting the object. The LIDAR transmits information about the detected object to the ECU 10. The camera, the radar, and the LIDAR need not necessarily all be provided together.

The GPS receiving unit 3 receives signals from three or more GPS satellites, thereby measuring the position of the vehicle (for example, the latitude and longitude of the vehicle). The GPS receiving unit 3 transmits information about the measured position of the vehicle to the ECU 10. In addition, instead of the GPS receiving unit 3, other means capable of identifying the latitude and longitude of the vehicle may be used. Further, for a collation of the measurement result of the sensor with map information which will be described later, it is preferable that the vehicle be provided with means capable of measuring the azimuth of the vehicle.

The vehicle internal information sensor 4 is detection equipment which detects a traveling state of the vehicle. The vehicle internal information sensor 4 includes a vehicle speed sensor. The vehicle speed sensor is a detector which detects the speed of the vehicle. For example, a wheel speed sensor which is provided at a wheel of the vehicle or a member such as a drive shaft rotating integrally with or synchronously with the wheels and detects the rotational speed of the wheels can be used as a vehicle speed sensor. The vehicle speed sensor transmits information about the detected vehicle speed (wheel speed information) to the ECU 10.

The vehicle internal information sensor 4 may include at least one of an acceleration sensor and a yaw rate sensor. The acceleration sensor is a detector which detects the acceleration of the vehicle. The acceleration sensor includes, for example, a forward and backward acceleration sensor which detects the acceleration in a forward-backward direction of the vehicle, and a lateral acceleration sensor which detects the lateral acceleration of the vehicle. The acceleration sensor transmits, for example, information about the acceleration of the vehicle to the ECU 10. The yaw rate sensor is a detector which detects a yaw rate (rotational angular velocity) around a vertical axis of the center of gravity of the vehicle. A gyro sensor can be used as such a yaw rate sensor, for example. The yaw rate sensor transmits information about the detected yaw rate of the vehicle to the ECU 10.

The map database 5 is a database provided with map information. The map database is formed in, for example, a HDD [Hard Disk Drive] mounted on the vehicle. For example, position information of a road, information about a road shape (for example, the types of a curve and a straight portion, the curvature of a curve, and the like), and position information of an intersection and a branch point are included in the map information. In addition, the map database may be stored in a computer of a facility such as an information processing center capable of communicating with the vehicle.

The navigation system 6 is a device which guides the driver of the vehicle to a destination set by the driver of the vehicle. The navigation system 6 calculates a route on which the vehicle is traveling, based on the position information of the vehicle measured by the GPS receiving unit 3 and the map information of the map database 5. The route may be a route in which a suitable lane is specified in sections of a plurality of lanes. The navigation system 6 calculates, for example, a target route from the position of the vehicle to a destination and notifies the driver of the target route by displaying it on a display and by an audio output of a speaker. The navigation system 6 transmits, for example, information about the target route of the vehicle to the ECU 10. In addition, the navigation system 6 may be stored in a computer of a facility such as the information processing center capable of communicating with the vehicle.

The HMI 7 is an interface for outputting and inputting information between an occupant (including a driver) of the vehicle and the vehicle control device 1. The HMI 7 is provided with, for example, a display panel for displaying image information to the occupant, a speaker for an audio output, and operation buttons or a touch panel for allowing the occupant to perform an input operation. The HMI 7 may output information to the occupant by using a portable information terminal wirelessly connected thereto and may accept an input operation by the occupant via the portable information terminal.

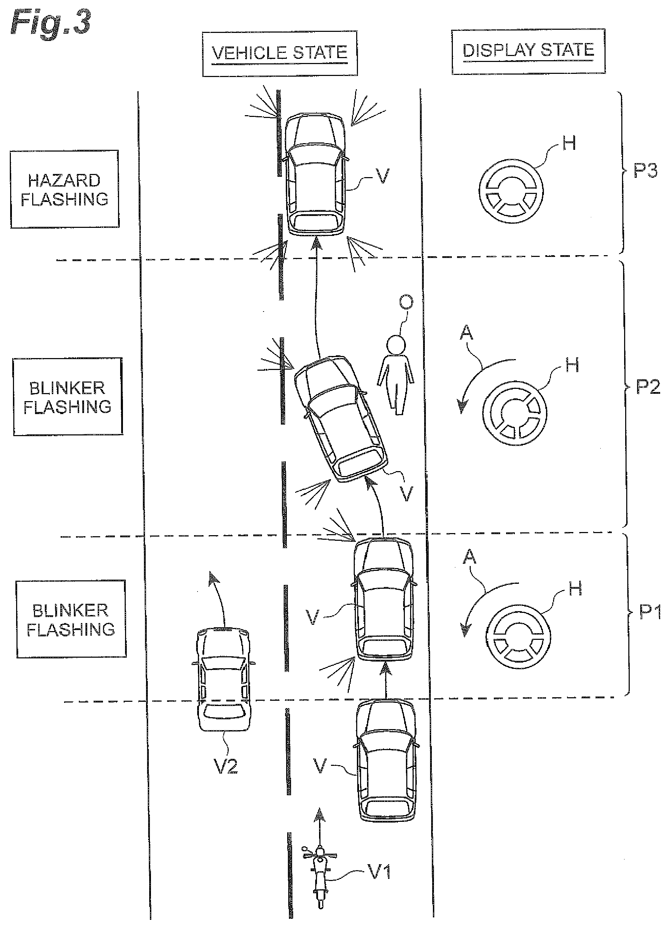

A steering display unit 71 which displays a steering control state in the steering and braking control is provided in the HMI 7. The steering display unit 71 is a display unit which displays steering display corresponding to a steering direction of the steering and braking control when avoidance of a collision with an object around the vehicle cannot be performed in the braking control. A display such as a monitor can be used. A steering wheel mark schematically depicting a steering wheel, and a steering direction mark indicating a steering direction by an arrow can be used as the steering display (for example the steering wheel mark H and steering direction mark A of FIG. 3). The steering display unit 71 displays the steering wheel mark rotated in accordance with the steering direction and displays the steering direction mark (for example, an arrow mark) in accordance with the steering direction. The steering display allows the driver to become aware of the steering control status of the vehicle. This makes it possible to reduce a sense of discomfort felt by the driver due to the steering and braking control. In addition, the steering display unit 71 may display a steering display other than the mark display or may be display, for example, a character display. In this case, it is favorable if the effect of the steering control to the right or the effect of the steering control to the left is displayed according to the steering direction of the steering and braking control.

The actuator 8 is a device which executes vehicle control of the vehicle. The actuator 8 includes at least a throttle actuator, a brake actuator, and a steering actuator. The throttle actuator controls the intake amount of air to an engine (the degree of throttle opening) according to a control signal from the ECU 10, thereby controlling the drive force of the vehicle.

The brake actuator controls a brake system according to a control signal from the ECU 10, thereby controlling a braking force which is applied to the wheels of the vehicle. A hydraulic brake system can be used, for example, as the brake system. The steering actuator controls the driving of an assist motor which controls a steering torque of an electric power steering system, according to a control signal from the ECU 10. In this way, the steering actuator controls a steering torque which is output to the vehicle, for example, by adjusting the output of an assist torque with respect to a steering torque of the driver. The steering actuator may control the steering torque which is output to the vehicle, regardless of the steering torque of the driver.

The direction indicator 21 is a lighting device which informs other road users of the steering direction of the vehicle, and is referred to as a blinker or a turn signal. Direction indicators 21 are provided at, for example, the right and left of the front and the right and left of the rear of the vehicle and are turned on by a lighting operation of the driver. The direction indicator 21 is controlled by a control signal from the ECU 10 so as to flash when the steering and braking control for collision avoidance is performed.

The hazard flashing indicator 22 is a lighting device which informs other road users of an emergency stop state of the vehicle and is referred to as a hazard lamp, a hazard indicator, or a hazard flasher. Hazard flashing indicators 22 are provided at, for example, the right and left of the front and the right and left of the rear of the vehicle and are operated by a lighting operation of the driver so as to flash. The hazard flashing indicators 22 are controlled by a control signal from the ECU 10 so as to flash when the vehicle has been stopped by the braking control or by the steering and braking control. In addition, when the vehicle has been stopped by the braking control or the steering and braking control, a flashing operation may be performed by using brake lamps as the hazard flashing indicators 22. Further, the hazard flashing indicator 22 may be combined with the direction indicator 21.

The ECU 10 is provided with an external situation recognition unit 11, a vehicle position recognition unit 12, a traveling state recognition unit 13, a collision determination unit 14, a braking avoidance determination unit 15, a traveling plan generation unit 16, a display control unit 17, a driving control unit 18, and a lighting control unit 19.

The external situation recognition unit 11 recognizes an external situation of the vehicle, based on the detection result (for example, the imaging information of the camera, the object information of the radar, the object information of the LIDAR, or the like) of the vehicle external information sensor 2. The external situation includes, for example, the position of the white line of a driving lane with respect to the vehicle, the position of the center of the lane and a road width, the shape of a road (for example, the curvature of the driving lane or a gradient change or undulation of a road surface), or a situation of an object around the vehicle (for example, the distance between the vehicle and the object, the position of the object with respect to the vehicle, the direction of movement of the object with respect to the vehicle, or the relative speed of the object with respect to the vehicle). Further, the accuracy of the position and the direction of the vehicle, which are acquired by the GPS receiving unit 3 or other means capable of identifying the latitude and longitude of the vehicle, may be supplemented by collating the detection result of the vehicle external information sensor 2 with the map information. The external situation recognition unit 11 functions as an object detection unit which detects an object around the vehicle. The object may be another vehicle (including a motorcycle), a pedestrian, a bicycle or an obstacle. The recognition information of the external situation recognition unit 11 is input to, for example, the collision determination unit 14, the braking avoidance determination unit 15, and the traveling plan generation unit 16.

The vehicle position recognition unit 12 recognizes the position of the vehicle (hereinafter referred to as a "vehicle position") on a map, based on the position information of the vehicle received by the GPS receiving unit 3 and the map information of the map database 5. In addition, the vehicle position recognition unit 12 may recognize the vehicle position which is used in the navigation system 6, by acquiring it from the navigation system 6. When the vehicle position of the vehicle can be measured by a sensor installed outside the vehicle, such as on a road, the vehicle position recognition unit 12 may acquire the vehicle position from the sensor by communication. The recognition information of the vehicle position recognition unit 12 is input to, for example, the collision determination unit 14, the braking avoidance determination unit 15, and the traveling plan generation unit 16.

The traveling state recognition unit 13 recognizes a traveling state of the vehicle, based on the detection result of the vehicle internal information sensor 4 (for example, the vehicle speed information of the vehicle speed sensor, the acceleration information of the acceleration sensor, and the yaw rate information of the yaw rate sensor). For example, a vehicle speed, acceleration, and a yaw rate are included in the traveling state of the vehicle. Further, the traveling state recognition unit 13 may recognize a traveling direction of the vehicle, based on a temporal change in the position of the vehicle. The recognition information of the traveling state recognition unit 13 is input to, for example, the collision determination unit 14, the braking avoidance determination unit 15, and the traveling plan generation unit 16.

The collision determination unit 14 determines whether or not there is a possibility that the vehicle may collide with the object detected by the external situation recognition unit 11. The collision determination unit 14 calculates collision time TTC [Time to Collision] with respect to the detected object. The calculation of the collision time TTC is performed, for example, by dividing the distance from the vehicle to the object by the relative speed. Further, the collision determination unit 14 determines whether or not the calculated collision time TTC is less than or equal to a threshold value TTCth, thereby determining a possibility that the vehicle may collide with the object. That is, when the collision time TTC is not less than or equal to the threshold value TTCth, the collision determination unit 14 determines that there is no possibility that the vehicle may collide with the object. On the other hand, when the collision time TTC is less than or equal to the threshold value TTCth, the collision determination unit 14 determines that there is a possibility that the vehicle may collide with the object. A set value which is set in the ECU 10 in advance is used, for example, as the threshold value TTCth. The determination information about a collision possibility is input to, for example, the braking avoidance determination unit 15, and the traveling plan generation unit 16.

The braking avoidance determination unit 15 determines whether or not a collision can be avoided by the braking control of the vehicle, based on the detection result of the object detection and the vehicle speed, when a determination that there is a possibility that the vehicle may collide with the object is made by the collision determination unit 14. For example, the braking avoidance determination unit 15 calculates a braking distance until the vehicle stops, based on the vehicle speed and allowable deceleration by the braking control. The allowable deceleration is, for example, the maximum deceleration (for example, a set value) allowed to the vehicle control device 1 in emergency avoidance. The braking avoidance determination unit 15 determines that a collision can be avoided by only the braking control when the braking distance is less than the distance from the vehicle to the object, and determines that a collision cannot be avoided by only the braking control when the braking distance is greater than or equal to the distance to the object. The determination information of the braking avoidance determination unit 15 is input to, for example, the display control unit 17 and the traveling plan generation unit 16.

The traveling plan generation unit 16 generates a traveling plan of the braking control, for example, when a determination that a collision can be avoided by the braking control is made by the braking avoidance determination unit 15. At least a target speed pattern is included in the traveling plan of the braking control. The traveling plan generation unit 16 generates the target speed pattern, based on the traveling state of the vehicle (for example, the vehicle speed) recognized by the traveling state recognition unit 13. The target speed pattern is, for example, data of a target speed for each predetermined internal or for each predetermined time in the traveling direction (for example, a direct advance direction) of the vehicle. The traveling plan generation unit 16 generates the target speed pattern so as to avoid a collision of the vehicle with the object by stopping the vehicle. In addition, the vehicle control device 1 may perform the braking control that decelerates the vehicle at an allowable deceleration set in advance, without generating the traveling plan of the braking control.

The traveling plan generation unit 16 generates a traveling plan of the steering and braking control, for example, when a determination that a collision cannot be avoided by the braking control is made by the braking avoidance determination unit 15. A target pathway and a target speed pattern are included in the traveling plan of the steering and braking control. The traveling plan generation unit 16 generates the target pathway of the vehicle, based on, for example, the vehicle position recognized by the vehicle position recognition unit 12, the external situation of the vehicle recognized by the external situation recognition unit 11, and the traveling state of the vehicle recognized by the traveling state recognition unit 13.

Specifically, the traveling plan generation unit 16 performs, for example, a process of searching for a pathway candidate for generating the target pathway. The search process is a process of generating a plurality of pathway candidates each having a changed traveling direction of the vehicle, and searching for a pathway candidate in which a collision with the object can be avoided. For example, the traveling plan generation unit 16 generates a plurality of pathway candidates each having a changed traveling direction of the vehicle and determines whether or not a collision with the object can be avoided. The pathway candidate is generated as a plurality of pathways in which, for example, the traveling direction of the vehicle is changed every ±0.1 degrees. The pathway candidate may be limited to being inside of the lane on which the vehicle is traveling.

When a pathway candidate in which a collision with the object can be avoided is generated, the traveling plan generation unit 16 sets the pathway candidate as the target pathway. For example, when there is a plurality of pathway candidates in which collision avoidance is possible, the traveling plan generation unit 16 sets a pathway candidate farthest from the object as the target pathway. This target pathway becomes a target pathway in the steering and braking control to avoid a collision by both the steering of the vehicle and the braking of the vehicle. That is, the target pathway becomes a pathway in which the vehicle decelerates and stops while avoiding a collision with the object by the steering and braking control. This target pathway may be generated within the lane on which the vehicle is traveling. In this case, it is possible to perform steering and braking control in which the vehicle travels along the target pathway generated within the lane, thereby avoiding a collision, and contact with a vehicle traveling on the neighboring lane is avoided.

The traveling plan generation unit 16 generates a target speed pattern along the target pathway, based on, for example, the traveling state of the vehicle (the vehicle speed) recognized by the traveling state recognition unit 13. The target speed pattern is, for example, data of a target speed for each predetermined internal or for each predetermined time on the target pathway. The traveling plan generation unit 16 generates a target speed pattern in which collision of the vehicle with the object is avoided.

The traveling plan generation unit 16 generates a traveling plan of the braking control when a pathway candidate in which a collision with the object can be avoided could not be generated. The braking control in this case is braking control for collision mitigation. The traveling plan generation unit 16 generates a traveling plan of the braking control for collision mitigation, for example, in the same manner as the traveling plan of the braking control for collision avoidance.

The traveling plan generation unit 16 may determine whether or not the steering and braking control of the vehicle according to the traveling plan is possible when a pathway candidate in which a collision with the object can be avoided can be generated and the traveling plan of the steering and braking control is generated. The traveling plan generation unit 16 determines whether or not the steering and braking control of the vehicle according to the traveling plan is possible, based on, for example, the vehicle position recognized by the vehicle position recognition unit 12, the external situation of the vehicle recognized by the external situation recognition unit 11, and the traveling state of the vehicle recognized by the traveling state recognition unit 13. For example, when disturbance which is not considered as the external situation is recognized, the traveling plan generation unit 16 determines that the steering and braking control of the vehicle along the target pathway is not possible. The disturbance which is not considered as the external situation is, for example, a decrease in road surface friction due to rain. The road surface friction can be inferred from, for example, the captured image of the camera by a well-known technique.

The traveling plan generation unit 16 generates a traveling plan of the braking control when it is determined that the steering and braking control of the vehicle according to the traveling plan is not possible. The braking control in this case is braking control for collision mitigation.

The display control unit 17 causes steering display corresponding to the steering direction of the steering and braking control for collision avoidance to be displayed on the steering display unit 71 when a determination that a collision cannot be avoided by the braking control is made by the braking avoidance determination unit 15 and when the traveling plan of the steering and braking control has been generated by the traveling plan generation unit 16. For example, when a determination that a collision cannot be avoided by the braking control is made by the braking avoidance determination unit 15, the display control unit 17 outputs a control signal to the steering display unit 71, thereby causing steering display corresponding to the steering direction of the steering and braking control to be displayed on the steering display unit 71.

In addition, the ECU 10 may have a warning control unit (not shown) which performs a warning control process that warns the driver when a determination that there is a possibility that the vehicle may collide with the object is made by the collision determination unit 14. The warning control unit performs a warning operation by outputting a control signal to the HMI 7, for example, when it is determined that there is a possibility that the vehicle may collide with the object. The warning operation may be any of the sounding of a buzzer, the transmission of a warning message by a speaker, warning display by a monitor, lighting or flashing of a warning lamp.

The driving control unit 18 executes traveling control of the vehicle, based on the traveling plan generated by the traveling plan generation unit 16. For example, the driving control unit 18 executes the braking control of the vehicle when there is a possibility of a collision with the object and a case where a collision can be avoided by the braking control (a case where the traveling plan of the braking control has been generated by the traveling plan generation unit 16). The driving control unit 18 executes the steering and braking control to avoid a collision by both the steering of the vehicle and the braking of the vehicle when a collision cannot be avoided by only the braking control (when the traveling plan of the steering and braking control has been generated by the traveling plan generation unit 16). In the steering and braking control, the steering and the braking need not necessarily be started at the same time, and the braking may occur first or steering may occur first. It is favorable if the steering and braking control is control that causes the vehicle to travel and stop for avoidance of a collision with the object by the combination of braking and steering. The driving control unit 18 outputs a control signal corresponding to the traveling plan to the actuator 8. In this way, the driving control unit 18 controls the traveling of the vehicle such that the vehicle travels according to the traveling plan.

The lighting control unit 19 performs operation control of the direction indicator 21 and the hazard flashing indicator 22. That is, the lighting control unit 19 outputs a control signal to the direction indicator 21 and the hazard flashing indicator 22, thereby controlling the operation of the direction indicator 21 and the hazard flashing indicator 22. For example, the lighting control unit 19 starts the flashing of the direction indicator 21 in accordance with the steering direction of the steering and braking control when a determination that a collision cannot be avoided by the braking control is made by the braking avoidance determination unit 15, and flashes the hazard flashing indicators 22 when the vehicle has been stopped by the steering and braking control. That is, the lighting control unit 19 performs control so as to flash the left direction indicator 21 when the vehicle is steered to the left by the steering and braking control, and performs control so as to flash the right direction indicator 21 when the vehicle is steered to the right by the steering and braking control. Further, the lighting control unit 19 performs control so as to flash the hazard flashing indicators 22 when the vehicle has stopped. The lighting control unit 19 ends the flashing control of the direction indicator 21 when the vehicle has stopped.

In addition, the external situation recognition unit 11, the vehicle position recognition unit 12, the traveling state recognition unit 13, the collision determination unit 14, the braking avoidance determination unit 15, the display control unit 17, the traveling plan generation unit 16, the driving control unit 18, and the lighting control unit 19 described above may be configured by introducing software or a program which implements the respective functions, into the ECU 10. Further, some or all of them may be configured as individual electronic control units.

Next, an operation of the vehicle control device 1 according to this embodiment will be described.

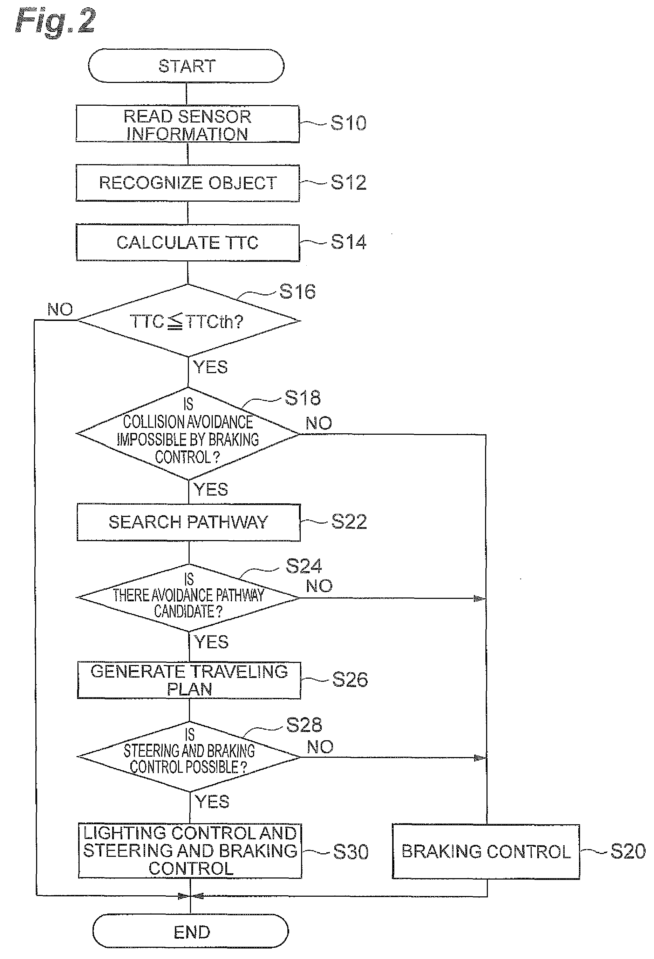

FIG. 2 is a flowchart showing a control process in the vehicle control device 1 according to this embodiment. The control process is performed, for example, when the vehicle is traveling, and is started along with the start of the engine of the vehicle. Further, the control process is executed by, for example, the ECU 10.

As shown in S10 of FIG. 2, first, a process of reading the sensor information is performed. This process is a process of reading, for example, the information of the vehicle external information sensor 2, the GPS receiving unit 3, the vehicle internal information sensor 4, and the navigation system 6. Then, the process proceeds to S12 and a process of recognizing an object is performed. The object recognition process is a process of recognizing information about the position of an object around the vehicle detected by the vehicle external information sensor 2, the distance between the object and the vehicle, and the relative speed between the object and the vehicle.

Then, the process proceeds to S14 and a process of calculating the collision time TTC with the object is performed. The calculation process is a process of calculating the collision time TTC between the object recognized by S12 and the vehicle. For example, the external situation recognition unit 11 calculates the collision time TTC by dividing the distance from the vehicle to the object by the relative speed.

Then, the process proceeds to S16 and whether or not the collision time TTC calculated in S14 is less than or equal to the threshold value TTCth is determined. This determination process is a process of determining whether there is a possibility that the vehicle may collide with the object. For example, the collision determination unit 14 determines that there is no possibility that the vehicle may collide with the object when the collision time TTC is not less than or equal to the threshold value TTCth, and determines that there is a possibility that the vehicle may collide with the object when the collision time TTC is less than or equal to the threshold value TTCth. It is favorable if the set value which is set in the ECU 10 in advance is used as the threshold value TTCth.

When a determination that the collision time TTC is not less than or equal to the threshold value TTCth is made in S16, it is determined that there is no possibility of collision with the object, and the control process of FIG. 2 is ended. Thereafter, the ECU 10 starts the process from S10 again. When a determination that the collision time TTC is less than or equal to the threshold value TTCth is made in S16, whether a collision with the object cannot be avoided by the braking control is determined (S18). For example, the braking avoidance determination unit 15 calculates a braking distance, based on the vehicle speed and the deceleration by the braking control, and determines that a collision can be avoided by the braking control, when the braking distance is less than the distance to the object, and determines that a collision cannot be avoided by the braking control, when the braking distance is greater than or equal to the distance to the object.

When a determination that a collision with the object can be avoided by the braking control is made in S18, the braking control for collision avoidance is performed (S20). The braking control for collision avoidance is a process of avoiding a collision with the object by the braking control alone, without using the steering control. That is, the driving control unit 18 outputs a control signal to the actuator 8 of a brake, thereby executing the braking control of the vehicle. At this time, for example, the lighting control unit 19 turns on or flashes brake lamps which are provided at a rear portion of the vehicle.

When a determination that a collision with the object cannot be avoided by the braking control is made in S18, search for a pathway candidate in which a collision with the object can be avoided is performed (S22). For example, the traveling plan generation unit 16 generates a plurality of pathway candidates each having a changed traveling direction of the vehicle.

Then, the process proceeds to S24 and whether or not there is a pathway candidate in which a collision with the object can be avoided is determined. This determination process is a process of determining whether or not there is a pathway candidate in which a collision with the object can be avoided. For example, the traveling plan generation unit 16 determines whether or not there is a pathway candidate in which a collision with the object can be avoided, with respect to the pathway candidates generated by S22. Then, when a pathway candidate in which a collision with the object can be avoided can be generated, the traveling plan generation unit 16 determines that there is a pathway candidate in which a collision with the object can be avoided. When a pathway candidate in which a collision with the object can be avoided cannot be generated, the traveling plan generation unit 16 determines that there is no pathway candidate in which a collision with the object can be avoided.

When a determination that there is no pathway candidate is made in S24, the braking control for collision mitigation is performed in S20. When a determination that there is a collision avoidance pathway is made in S24, the traveling plan of the steering and braking control is generated (S26). The traveling plan generation unit 16 sets the pathway candidate in which a collision with the object can be avoided as the target pathway of the vehicle. For example, when there is a plurality of pathway candidates in which a collision can be avoided, the traveling plan generation unit 16 sets the pathway candidate farthest from the object as the target pathway of the vehicle. The traveling plan generation unit 16 generates a target speed pattern along the target pathway, based on, for example, the traveling state of the vehicle (the vehicle speed) recognized by the traveling state recognition unit 13. The traveling plan generation unit 16 generates the traveling plan of the steering and braking control which includes the target pathway and the target speed pattern.

When the traveling plan has been generated by S26, whether or not the steering and braking control of the vehicle according to the traveling plan is possible is determined (S28). The traveling plan generation unit 16 determines whether or not the steering and braking control of the vehicle according to the traveling plan is possible, based on, for example, the vehicle position recognized by the vehicle position recognition unit 12, the external situation of the vehicle recognized by the external situation recognition unit 11, and the traveling state of the vehicle recognized by the traveling state recognition unit 13.

When a determination that the steering and braking control of the vehicle according to the traveling plan is not possible is made in S28, the braking control for collision mitigation is performed in S20. When a determination that the steering and braking control of the vehicle according to the traveling plan is possible is made in S28, the lighting control and the steering and braking control are executed (S30).

The lighting control process is a process of controlling the operations of the direction indicator 21 and the hazard flashing indicator 22. The steering and braking control process is a process of performing avoidance of a collision with the object by both the steering and the braking of the vehicle. The lighting control process and the steering and braking control process may be started at the same time, or the steering and braking control process may be started after the lighting control process is started. For example, the lighting control unit 19 may outputs control signal to the direction indicator 21 and the hazard flashing indicator 22, as the lighting control process, thereby controlling the operations of the direction indicator 21 and the hazard flashing indicator 22. The direction indicator 21 is flashed in accordance with the steering direction of the steering and braking control, and the hazard flashing indicators 22 are flashed when the vehicle has been stopped by the steering and braking control.

Further, as the steering and braking control process, the driving control unit 18 outputs a control signal to the actuator 8, thereby actuating the brake actuator and the steering actuator so as to cause the vehicle to travel along the target pathway. The steering and braking control process is not limited to simultaneously performing the braking and the steering, and the braking may occur first or the steering may occur first. Further, a steering display process may be performed along with the lighting control process and the steering and braking control process. The steering display process is a process of informing the driver that the steering control is being performed, through the steering display. That is, the display control unit 17 outputs a control signal to the steering display unit 71, thereby causing the steering display unit 71 to perform steering display. Specific process contents will be described later.

FIG. 3 shows the behavior of the vehicle at the time of the execution of the lighting control process and the steering and braking control process, a flashing control state, and a steering display state to the driver. P1 of FIG. 3 shows a situation at the time of the start of the steering and braking control of a vehicle V. The vehicle control device 1 starts the lighting control process at the start of, for example, the steering and braking control. Flashing control (blinker flashing) of the direction indicator 21 corresponding to the steering direction of the steering and braking control is performed. In FIG. 3, the steering direction is a leftward direction and the flashing control of the left direction indicator 21 is performed. Further, at this time, in the steering display unit 71, the steering wheel mark H and the steering direction mark A are displayed to the driver. The steering wheel mark H is a mark indicating that the steering and braking control is being executed, and is displayed in a state where it has been rotated according to the steering state of the vehicle V in the steering and braking control. The steering direction mark A is an arrow mark and indicates the steering direction. By performing the flashing control of the vehicle V, it is possible to inform other vehicles V1 and V2 near the vehicle of the steering direction of the vehicle V by the steering and braking control. Further, by showing the steering display such as the steering wheel mark H during the steering and braking control, it is possible to inform the driver that the steering and braking control is being executed.

P2 of FIG. 3 shows a situation in which the steering and braking control to avoid a collision with an object O (here, a pedestrian) is being executed. In P2, the vehicle V decelerates while traveling so as to avoid the object O. The lighting control process also continues to be executed, and thus the flashing control is performed. The steering wheel mark H is displayed in a state where it has been rotated according to the steering situation of the vehicle V.

P3 of FIG. 3 shows a situation in which the vehicle V has been stopped by the steering and braking control. At this time, the hazard flashing indicators 22 provided at the front and rear and the right and left of the vehicle V are actuated by the lighting control process, and the flashing control (hazard flashing) is performed. In the steering display unit 71, the steering wheel mark H is displayed and the steering direction mark A is turned off. By performing the flashing control of the hazard flashing indicators 22 of the vehicle V, it is possible to inform the other vehicles V1 and V2 near the vehicle that the vehicle V is in an emergency stop. Further, as shown in FIG. 3, by setting the target pathway to avoid a collision with the object O to be within the lane on which the vehicle V travels, and performing the steering and braking control, contact with the other vehicle V2 which travels on the neighboring lane can be avoided.

Further, in FIG. 2, if the process of S30 is finished, the control process of FIG. 2 is ended. In addition, in the control process of FIG. 2, as long as it does not affect the control result, the execution of some of the control process in FIG. 2 may be omitted. For example, the process of S28 is not essential. Further, as long as it does not affect the control result, the order of the control process may be changed and/or another control process may be added.

As described above, in the vehicle control device 1 of this embodiment, when the steering and braking control of the vehicle is performed in order to avoid a collision with an object, the direction indicator is flashed according to the steering direction of the vehicle and the hazard flashing indicators are flashed when the vehicle has stopped. Therefore, it is possible to inform other road users through the flashing of the direction indicator of the steering direction of the vehicle caused by the steering and braking control, and it is possible to inform other road users through the flashing of the hazard flashing indicators that the vehicle is in an emergency stop,.

Further, in the vehicle control device 1 of this embodiment, by generating, within the lane on which the vehicle is traveling, the target pathway for avoiding a collision with an object and performing the steering and braking control in accordance with the target pathway, it is possible to drive of the vehicle while avoiding contact with a vehicle which is being driven on a neighboring lane.

Further, in the vehicle control device 1 according to this embodiment, when the steering and braking control of the vehicle is performed in order to avoid a collision with an object, by causing steering display to be displayed on a display in the vehicle in accordance with the steering direction of the steering and braking control, the driver can be made aware of the steering control situation of the vehicle. It is thus possible to reduce a sense of discomfort experienced by the driver due to the steering and braking control of the vehicle.

In addition, the embodiment described above is just one example of an embodiment of the vehicle control device according to the present invention, and the vehicle control device according to the present invention is not limited to the above-described embodiment. The vehicle control device according to the present invention may include modifications to the vehicle control device described above, or may include other vehicle control devices, within the scope of the claims.

For example, the vehicle control device 1 of the embodiment described above has been described as applied to a vehicle for manual driving. However, the vehicle control device according to the present invention may be applied to a vehicle with automatic driving control.

## Claims

1. A vehicle control device (1) comprising:
an object detection unit (2) configured to detect an object around a vehicle;
a collision determination unit (14) configured to determine whether or not there is a possibility that the vehicle may collide with the object detected by the object detection unit (2);
a braking avoidance determination unit (15) configured to determine, when a determination that there is a possibility that the vehicle may collide with the object is made by the collision determination unit (14), whether or not a collision can be avoided by braking control of the vehicle, based on a detection result of the object detection unit (2) and a vehicle speed of the vehicle;
a driving control unit (18) configured to perform the braking control when a determination that the collision can be avoided by the braking control is made by the braking avoidance determination unit (15), and to perform steering and braking control to avoid the collision by both steering of the vehicle and braking of the vehicle, when a determination that the collision cannot be avoided by the braking control is made by the braking avoidance determination unit (15); and
a lighting control unit (19) configured to start flashing of a direction indicator (21) of the vehicle corresponding to a steering direction of the steering and braking control when a determination that the collision cannot be avoided by the braking control is made by the braking avoidance determination unit (15), and to flash hazard flashing indicators (22) of the vehicle when the vehicle has been stopped by the steering and braking control.

2. The vehicle control device (1) according to Claim 1, further comprising:
a traveling plan generation unit (16) configured to generate a target pathway, within a lane on which the vehicle is traveling, for avoiding a collision of the vehicle with the object, when a determination that the collision cannot be avoided by the braking control is made by the braking avoidance determination unit (15),
wherein the driving control unit (18) is configured to perform the steering and braking control in accordance with the target pathway.

3. The vehicle control device (1) according to Claim 1 or 2, further comprising:
a display control unit (17) configured to cause steering display (71) corresponding to a steering direction of the steering and braking control by the driving control unit (18) to be displayed on a display in the vehicle when a determination that the collision cannot be avoided by the braking control is made by the braking avoidance determination unit (15).
